# EUROPEAN PATENT SPECIFICATION

(11) **EP 1 352 563 B1**
(45) Date of publication and mention of the grant of the patent: **31.08.2005**
(21) Application number: 03075812.2
(22) Date of filing: 19.03.2003
(51) Int. Cl.: A01N 59/00

(54) **Compositon having insect controlling activity**
Zusammensetzung zur Insektenbekämpfung
Composition pour lutter contre les insectes

(30) Priority: 09.04.2002 NL 1020344; 25.04.2002 NL 1020467
(43) Date of publication of application: 15.10.2003
(73) Proprietor: Denka International Holding B.V., 3771 NG Barneveld (NL)
(72) Inventor: Den Braber, Antonie Arie, 3844 GC Harderwijk (NL); Moskal, Janusz Ryszard, 3871 CE HOEVELAKEN (NL)
(74) Representative: du Pont, Jeroen

(56) References cited:
- EP-A- 0 367 934
- WO-A-01/35744
- US-A- 2 818 340
- US-A- 3 159 536
- US-A- 4 820 517
- DATABASE WPI Section Ch, Week 198801 Derwent Publications Ltd., London, GB; Class C03, AN 1988-004825 XP002223328 & JP 62 270485 A (KAMEI Y), 24 November 1987 (1987-11-24)

## Description

The present invention relates to a composition having insect controlling activity, in particular to a composition having insect controlling activity with respect to the red mite *Dermanysssus gallinae*.

One problem which arises with known insect control agents is that firstly resistance has been built up to a number of insect control agents (such as for example carbaryl® and solfac®), and secondly a number of insect control agents which are still effective are prohibited by the authorities on account of their harmful side effects.

The above problem arises in particular with regard to the control of insects in birds, in particular chickens.

It has been found that in the absence of suitable insect control agents the condition of the chickens deteriorates. In the event of a red mite plague, the chickens suffer, for example, from anaemia. Furthermore, the condition of the chicken has an influence on its eggs, since the deterioration in the condition of the chicken lowers egg production. There is also a risk of the chicken's eggs becoming spotty. This means that the eggs have a less attractive appearance, causing their price to drop.

Therefore, it should be clear that in the specialist field there is an ongoing need to provide novel insect control agents.

US-A 3,159,536 describes an insecticidal composition which has a conductivity of no more than 10⁻⁷ mho per centimetre for a bulk density of 0.2 g per cm³. The composition described in US-A 3,159,536 comprises at least 65% by weight, preferably at least 75% by weight or more, of hydrophobic silica-containing material (cf. column 8, lines 2-6). The high percentage of hydrophobic silica makes the composition expensive to use.

Furthermore, it has been found that insecticidal compositions with such a high content of hydrophobic silica are not sufficiently effective under moist conditions such as those which are present in spaces in which chickens and other birds are kept.

EP-A-0-367 934 and WO 01/35744 describe aqueous insecticidal compositions which contain a high percentage (based on dry matter) of hydrophobic silica. One drawback of aqueous insecticides is that they are difficult to apply. It has been found that with aqueous insecticides lumps may form, which can cause problems with spraying them. Moreover, it has been found that aqueous insecticides have a less effective activity.

Therefore, it is an object of the present invention to provide a solution to the abovementioned problems. A further object of the present invention is to provide an inexpensive composition having insect controlling activity which can be used in an ecologically favourable way, i.e. without harmful side effects on the environment.

The above objects are achieved by the present invention by a composition having insect controlling activity, which comprises a carrier and, as active ingredient, at least hydrophobic amorphous silica, the composition containing 5-50% by weight, preferably 20-40% by weight, most preferably 25-35% by weight of hydrophobic amorphous silica, based on composition dry matter.

Surprisingly, it has been found that, as will be demonstrated below by tests, the composition according to the invention has a particularly effective insect controlling activity. It has been found that in some cases the efficacy is in some cases insufficient if less than 5% by weight of hydrophobic silica is used. More than 50% of hydrophobic silica makes the composition too expensive. Moreover, such a high level makes the composition less effective if it is used under moist conditions such as those which are present in spaces in which chickens are kept.

A particular advantage of the composition according to the present invention is that the composition can be obtained easily and inexpensively.

A further advantage of the composition according to the invention is that the composition is chemically safe, i.e. the composition is not combustible, explosive or particularly toxic. Also, the composition according to the invention is physically safe, since its separate constituents are also used in other food-related products.

According to the invention, the term "insect controlling activity" does not per se indicate an insect-killing (insecticidal) activity, but rather may also indicate an activity which causes insects to be repelled or even to be immobilized in a certain position, provided only that the negative effects of the presence of the insects to be controlled are alleviated or eliminated.

In addition to amorphous silica, the composition according to the invention also contains a carrier. Suitable carriers include, inter alia, diatomaceous earth, talc, clay, bentonite, montmorillonite, kaolin, activated carbon, attapulgite, amorphous alumina or mixtures thereof. Particularly suitable carriers include, inter alia: Talc ST60 (Naintsch Mineralwerke, Graz, Austria), Damolin GM2 (Damolin A/S, Fur, Denmark), Arvolite SP (Prayon Benelux, Mechelen, Belgium) and Montmorillonite K10 (Süd Chemie, Munich, Germany).

The composition according to the invention is preferably in the form of a powder. Furthermore, it is preferable for the composition to contain less than 15%, preferably less than 10%, more preferably less than 5% of moisture.

It will be readily apparent to a person skilled in the art what is meant by the term hydrophobic silica. Hydrophobic silica may be any hydrophobic or hydrophobized silicon-containing material, such as synthetic silicas, including fumed silica, precipitated silica and silica aerogels; and naturally occurring silicon-containing material, such as diatomaceous earth, very fine sand, insoluble metal silicates and silicate clay grades. According to the invention, the term "hydrophobic silica" also encompasses the derivatives thereof. Hydrophobic silica is difficult or impossible to wet with water. Hydrophobic silica can be obtained, inter alia, by reacting suitable chlorosilanes with silanol groups at the silica surface of the hydrophilic silica. Hydrophobic silica is also commercially available per se. Examples of suitable amorphous hydrophobic silicas include, inter alia, Sipernat® D10, Sipernat® D17, Sipernat® C600, Sipernat® C630 (available from Degussa, Frankfurt am Main, Germany).

According to the present invention, it is preferable for the amorphous silica to be so hydrophobic that the silanol powder cannot be wetted as described in "The Registration Handbook/Guidelines for the generation of data on the physical, chemical and technical properties of plant protection products (Pesticides Safety Directorate, Approvals Administration: Room 208, Mallard House, Kings Pool, 3 Peasholme Green, York YO1 7PX) - Annex point IIIa 2.8.1, method MT 53,3", i.e. water dripped onto the silica is still transparent after one hour. It has been found that in particular Sipernat® D10 and Sipernat® D17 give very favourable results.

In principle, any type of hydrophobic amorphous silica can be used in the composition according to the invention. However, the hydrophobic amorphous silica preferably has a specific surface area of 80-250 m²/g, preferably 90-160 m²/g, most preferably 90-110 m²/g, determined in accordance with ISO 5794-1.

Furthermore, it has proven favourable if the hydrophobic amorphous silica has a mean particle size of 2-10 micrometers, preferably 4-8 micrometers, most preferably 6.5-7.5 micrometers, determined in accordance with ASTM C 690-1992.

Tests which are explained in more detail below have shown that a particularly favourable insect controlling activity can be obtained if the composition also contains an additive selected from the group consisting of essential oils, garlic, black pepper, cayenne pepper, horseradish, paprika, hot paprika, menthol-eucalyptus concentrate or a mixture thereof, preferably in powder form. Other suitable additives include, inter alia, onion concentrate, neem cake powder and powder of *Quassia amara.* The additive preferably forms 1-10% by weight, preferably 1-5% by weight, preferably approx. 2% by weight of the composition.

The additive according to the invention is preferably untreated, i.e. the chemical state of the additive is not changed by, for example, hydrogenation, heating, etc. However, the additive may, for example, be milled, since this does not alter the chemical state.

According to a particularly preferred embodiment of the composition according to the invention, the hydrophobic amorphous silica has a specific surface area of 90-110 m²/g, determined in accordance with ISO 5794-1, and a mean particle of 6.5-7.5 micrometers, determined in accordance with ASTM C 690-1992. It is particularly preferable for the composition to contain 1-5% by weight of hot paprika.

The present invention also relates to the use of the composition according to the invention as an insect control agent, in particular to control one of the insects selected from the group consisting of lice, cockroaches, flies, mites, fleas, storage pests and ants, and in particular *Dermanyssus gallinae, Blatella germanica, Calliphora vomitora* and *Lasius niger,* more particularly *Dermanyssus gallinae.*

The present invention also relates the use of the composition according to the invention as active ingredient for the production of a pharmaceutical preparation having insect controlling activity, in particular for the treatment of pets, such as dogs, cats and guinea pigs, livestock, birds, such as chickens, pigeons and tropical birds, and more particularly chickens.

The use according to the invention has proven particularly effective at controlling one of the insects selected from the group consisting of lice, cockroaches, flies, mites, fleas, storage pests and ants, in particular *Dermanyssus gallinae, Blatella germanica, Calliphora vomitora* and *Lasius niger,* more particularly *Dermanyssus gallinae.*

The invention will be explained in more detail below with reference to a number of non-limiting exemplary embodiments.

### Example 1

Laboratory evaluation of the insect controlling activity of various compositions on *Dermanyssus gallinae.*

### A. Compositions

The following compositions were prepared by mixing the constituents given in Table 1.

**Table 1**

| Composition No. | Silica | Carrier | Other |
|---|---|---|---|
| 1-1 | 32.5% by weight of Sipernat® D17 | 62.5% by weight of Damolin | 2.5% by weight of onion concentrate + 2.5% by weight of menthol-eucalyptus concentrate |
| 1-2 | 35% by weight of Sipernat® D17 | 65% by weight of Damolin | -- |
| 1-3 | 32.5% by weight of Sipernat® D17 | 62.5% by weight of Damolin | 5% by weight of garlic powder |
| 1-4 | 32.5% by weight of Sipernat® D17 | 62.5% by weight of Damolin | 5% by weight of horse-radish powder |
| 1-5 | 32.5% by weight of Sipernat® D17 | 62.5% by weight of Damolin | 5% by weight of paprika powder |
| 1-6 | 32.5% by weight of Sipernat® D17 | 62.5% by weight of Damolin | 5% by weight of cayenne pepper |
| 1-7 | 32.5% by weight of Sipernat® D17 | 62.5% by weight of Damolin | 5% by weight of black pepper |
| 1-8 | 32.5% by weight of Sipernat® D17 | 62.5% by weight of Damolin | 5% by weight of onion concentrate |
| 1-9 | 35% by weight of Sipernat® D17 | 65% by weight of Talc ST60 | -- |

Sipernat® D17 is available from Degussa; Damolin from Damolin A/S; Talc ST60 from Naintsch Mineralwerke. The remaining constituents were purchased from a supermarket.

### B. Comparison test

Adult *Dermanyssus gallinae* were collected in various chicken sheds and were used to determine the insect controlling activity of the compositions shown in Table 1. The percentage mortality (mean from 6 to 14 independent experiments) was determined after 24 hours, 48 hours and 72 hours following the application of 0.5 g of composition in a Petri dish (diameter: 9 cm) in which living, adult *Dermanyssus gallinae* were released. During the test, the temperature was held at 22-23°C. The results are presented in Table 2.

**Table 2.**

| Percentage mortality (mean from 6 to 14 independent experiments) | | | |
|---|---|---|---|
| Composition No. | 24 hr | 48 hr | 72 hr |
| 1-1 | 96.6 ± 0.2 | 97.9 ± 0.2 | 99.6 ± 0.1 |
| 1-2 | 97.0 ± 0.1 | 98.2 ± 0.2 | 99.7 ± 0.1 |
| 1-3 | 98 | 98 | 98 |
| 1-4 | 98 | 98 | 98 |
| 1-5 | 98 | 98 | 98 |
| 1-6 | 98 | 98 | 98 |
| 1-7 | 98 | 98 | 98 |
| 1-8 | 98 | 98 | 98 |
| 1-9 | 98 | 98 | 98 |

The same test was repeated but now at a temperature of 28-30°C. The results are presented in Table 3.

**Table 3.**

| Percentage mortality (mean from 6 to 14 independent experiments) | | | |
|---|---|---|---|
| Composition No. | 24 hr | 48 hr | 72 hr |
| 1-3 | 98 | 99 | 100 |
| 1-4 | 98 | 98 | 99 |
| 1-5 | 98 | 99 | 100 |
| 1-6 | 98 | 98 | 99 |
| 1-7 | 98 | 99 | 100 |
| 1-8 | 98 | 98 | 99 |
| 1-9 | 98 | 98 | 99 |

It can be seen from Tables 2 and 3 above that the tested compositions have a high efficacy even at room temperature. The *Dermanyssus gallinae* red mites were immobilized immediately after contact with the powder. Small quantities of protonymphs and a number of deutonymphs were able to survive a few days but were unable to move. Increasing the temperature lead to an increased mortality, probably as a result of the immobilized insects "drying out" more quickly. Also, the further additives, in particular garlic (1-3), paprika (1-5) and black pepper (1-7) were found to increase the efficacy.

### Example 2

### Laboratory evaluation of the insect controlling activity of various compositions on Blatella germanica.

### A. Compositions

The following materials were prepared by mixing the constituents described in Table 4.

**Table 4**

| Composition No. | Silica | Carrier | Other |
|---|---|---|---|
| 2-1 | CaboSil M5 | | |
| 2-2 | Sipernat® D17 | | |
| 2-3 | Alumina C | | |
| 2-4 | 5% by weight of Sipernat® D17 | ST60 (Talc) | |
| 2-5 | 10% by weight of Sipernat® D17 | ST60 (Talc) | |
| 2-6 | 20 by weight of Sipernat® D17 | ST60 (Talc) | |
| 2-7 | 30% by weight of Sipernat® D17 | ST60 (Talc) | |
| 2-9 | 20% by weight of Sipernat® D17 | Damolin GM2 | |
| 2-10 | 30% by weight of Sipernat® D17 | Damolin GM2 | |
| 2-11 | | Damolin GM2 | |
| 2-12 | 35% by weight of Sipernat® D17 | 65% by weight of Damolin GM2 | |
| 2-13 | 34% by weight of Sipernat® D17 | 64% by weight of Damolin GM2 | 2% by weight of onion concentrate |
| 2-14 | 33% by weight of Sipernat® D17 | 63% by weight of Damolin GM2 | 2% by weight of onion concentrate and 2% by weight of menthol-eucalyptus concentrate |
| 2-15 | 17.5% by weight of Sipernat® D17 + 17.5% by weight CaboSil M5 | 65% by weight of Damolin GM2 | |
| 2-16 | 35% by weight of CaboSil M5 | 65% by weight of Damolin GM2 | |

Sipernat® D17 is available from Degussa; Damolin GM2 from Damolin; Talc ST60 from Naintsch Mineralwerke; CaboSil M5 from Cabot Corporation, Tuscola (IL), U.S.A.; Alumina C from Degussa. The other constituents were purchased from a supermarket.

### B. Evaluation test

The compositions listed in Table 4 were used to carry out mortality tests on the German cockroach *Blatella germanica.* All the tests were carried out using plastic boxes (length x width x height: 38 cm x 20 cm x 25 cm) provided with a shelter, a water trough and a feeding trough. The box was divided into two identical parts, and one part was dusted with 5 g of the selected powder composition; the other part remained powder-free. The water trough and the feed trough were positioned in the part which was dusted with powder, while the shelter was positioned in the powder-free part. All the experiments were carried out under controlled temperature and humidity conditions. Ten insects (*Blatella germanica*) without age or sex preselection (nymphs in their final stage, males and females, but no females bearing eggs) were used for each separate experiment. The insects were acclimatized for 24 hours. Dry white bread was used as standard feed. The mortality observations were carried out at various times during the 24-hour test. The results are shown in Table 5a-5e.

**Table 5a.**

| Percentage mortality (mean of 3 tests). Temperature = 20°C, relative humidity = 90%. | | | |
|---|---|---|---|
| Time [min]/ Test material | 2-1 | 2-2 | 2-3 |
| Start | 0 | 0 | 0 |
| 90 | 0 | 37 | 0 |
| 180 | 12 | 50 | 9 |
| 1440 | 37 | 100 | 18 |

It can be seen from Table 5a that Sipernat® D17 (2-2) has a particularly favourable efficacy.

**Table 5b.**

| Percentage mortality (mean of 3 tests). Temperature = 23°C, relative humidity = 84%. | | | | | |
|---|---|---|---|---|---|
| Time [min]/ Test material | 2-4 | 2-5 | 2-2 | 2-6 | 2-7 |
| Start | 0 | 0 | 0 | 0 | 0 |
| 285 | 0 | 0 | 50 | 9 | 55 |
| 1440 | 8 | 23 | 100 | 55 | 100 |

**Table 5c.**

| Percentage mortality (mean of 3 tests). Temperature = 36°C, relative humidity = 90%. | | | | |
|---|---|---|---|---|
| Time [min]/ Test material | 2-7 | 2-9 | 2-10 | 2-11 |
| Start | 0 | 0 | 0 | 0 |
| 90 | 10 | 0 | 20 | 0 |
| 180 | 90 | 70 | 100 | 0 |
| 1440 | 100 | 80 | 100 | 30 |

**Table 5d.**

| Percentage mortality (mean of 3 tests). Temperature = 36°C, relative humidity = 85%. | | | |
|---|---|---|---|
| Time [min]/ Test material | 2-12 | 2-13 | 2-14 |
| Start | 0 | 0 | 0 |
| 60 | 20 | 10 | 0 |
| 150 | 40 | 50 | 40 |
| 1080 | 90 | 90 | 90 |
| 1440 | 90 | 90 | 100 |

**Table 5e.**

| Percentage mortality (mean of 3 tests). Temperature = 25°C, relative humidity = 70%. | | | |
|---|---|---|---|
| Time [min]/ Test material | 2-12 | 2-15 | 2-16 |
| Start | 0 | 0 | 0 |
| 180 | 0 | 0 | 0 |
| 1140 | 100 | 70 | 30 |
| 1440 | 100 | 70 | 30 |

The insect controlling activity of the compositions according to the invention can be seen from the above Tables 5a-5e.

### Example 3

### Laboratory evaluation of insect controlling activity of various compositions on Blatella germanica (forced mortality tests)

### A. Compositions

The following compositions were prepared by mixing the constituents listed in Table 6.

**Table 6**

| Composition | Silica | Carrier | Other |
|---|---|---|---|
| 3-1 | 35% by weight of Sipernat® D17 | Damolin GM2 | |
| 3-2 | 35% by weight of Sipernat® D10 | Damolin GM2 | |
| 3-3 | 35% by weight of Sipernat® D600 | Damolin GM2 | |
| 3-4 | 35% by weight of Sipernat® D630 | Damolin GM2 | |
| 3-5 | | Arvolite SP | |
| 3-6 | 35% by weight of Sipernat® D17 | Arvolite SP | |
| 3-7 | | Talc ST60 | |
| 3-8 | 35% by weight of Sipernat® D17 | Talc ST60 | |
| 3-9 | 35% by weight of Sipernat® D17 | Talc ST60, 32.5% by weight of Arvolite | |
| 3-10 | 35% by weight of Sipernat® D17 | 32.5% by weight of Damolin GM2 and 32.5% by weight of Arvolite | |
| 3-11 | 35% by weight of Sipernat® D17 | 32.5% by weight of Damolin GM2 and 32.5% by weight of ST60 | |
| 3-12 | Sipernat®D17 | | 5% teasaponin |
| 3-13 | 35% by weight of Sipernat® D17 | Montmorrillonite K10 | |
| 3-14 | 35% by weight of Sipernat® D17 | Moler KM-W | |
| 3-15 | 35% by weight of Sipernat® D17 | Alumina C | |
| 3-17 | 35% by weight of Sipernat® D17 | Norit SX ultra | |
| 3-18 | 32.5% by weight of Sipernat® D17 | 62.5% by weight of Damolin GM2 | 5% by weight of garlic powder |
| 3-19 | 32.5% by weight of Sipernat® D17 | 62.5% by weight of Damolin GM2 | 5% by weight of horseradish powder |
| 3-20 | 32.5% by weight of Sipernat® D17 | 62.5% by weight of Damolin GM2 | 5% by weight of paprika powder |
| 3-21 | 32.5% by weight of Sipernat® D17 | 62.5% by weight of Damolin GM2 | 5% by weight of cayenne pepper |
| 3-22 | 32.5% by weight of Sipernat® D17 | 62.5% by weight of Damolin GM2 | 5% by weight of black pepper |
| 3-23 | 32.5% by weight of Sipernat® D17 | 62.5% by weight of Damolin GM2 | 5% by weight of onion concentrate |

Sipernat® D17 is available from Degussa; Damolin GM2 from Damolin; Talc ST60 from Naintsch Mineralwerke; Moler KM-W from Damolin; Arvolite SP from Prayon Benelux; K10 from Süd Chemie. The other constituents were purchased from a supermarket.

### B. Tests

All the tests described below (Tables 7-12) were carried out using plastic boxes (length x width x height: 38 cm x 20 cm x 25 cm) as the test area. 10 insects without age or sex preselection (nymphs in the later stage, males and females, but no females bearing eggs) were used for each separate experiment. The insects were released in the plastic box and 1 g of the powder composition was added all at once. The box was shaken gently in order to spread the powder over the entire surface. The cockroaches came into direct contact with the tested compositions. The mortality observations were carried out a number of times. All the experiments were carried out under the controlled temperature and moisture conditions described.

Compositions 3-1 to 3-4 from Table 6 were subjected to mortality tests at 20°C and 60% relative humidity in order to determine the influence of the various hydrophobic silicas. The results are presented in Table 7.

**Table 7.**

| Percentage mortality (mean of 3 independent tests) | | | | |
|---|---|---|---|---|
| Time [min]/ Test material | 3-1 | 3-2 | 3-3 | 3-4 |
| Start | 0 | 0 | 0 | 0 |
| 150 | 0 | 10 | 50 | 30 |
| 240 | 60 | 40 | 100 | 100 |
| 480 | 100 | 100 | 100 | 100 |

The same test was repeated at a temperature of 22°C and a relative humidity of 65%. The results are given in Table 8.

**Table 8**

| Percentage mortality (mean of 3 independent tests) | | | | |
|---|---|---|---|---|
| Time [min]/ Test material | 3-1 | 3-2 | 3-3 | 3-4 |
| Start | 0 | 0 | 0 | 0 |
| 150 | 20 | 10 | 90 | 90 |
| 240 | 40 | 80 | 100 | 100 |
| 480 | 100 | 100 | 100 | 100 |

The compositions 3-1 and 3-5 to 3-8 were subjected to mortality tests at 25°C and a relative humidity of 72% in order to compare the influence of various mineral carriers. The results are presented in Table 9.

**Table 9.**

| Percentage mortality (mean of 3 independent tests) | | | | | |
|---|---|---|---|---|---|
| Time [min]/ Test material | 3-1 | 3-5 | 3-6 | 3-7 | 3-8 |
| Start | 0 | 0 | 0 | 0 | 0 |
| 200 | 0 | 0 | 0 | 0 | 0 |
| 290 | 40 | 10 | 10 | 30 | 40 |
| 350 | 70 | 50 | 70 | 40 | 60 |
| 480 | 100 | 90 | 100 | 60 | 60 |

Furthermore, mortality tests were carried out at, in succession, 19°C and a relative humidity of 60% (Table 10), a temperature of 19°C and a relative humidity of 65% (Table 11) and a temperature of 20°C and a relative humidity of 60% (Table 12).

**Table 10.**

| Percentage mortality (mean of 3 independent tests) | | | | |
|---|---|---|---|---|
| Time [min]/ Test material | 3-1 | 3-9 | 3-10 | 3-11 |
| Start | 0 | 0 | 0 | 0 |
| 300 | 10 | 0 | 10 | 0 |
| 360 | 20 | 10 | 70 | 10 |
| 480 | 30 | 20 | 80 | 20 |
| 1260 | 100 | 100 | 100 | 100 |

**Table 11.**

| Percentage mortality (mean of 3 independent tests) | | | |
|---|---|---|---|
| Time [min]/ Test material | 3-1 | 3-12 | 3-13 |
| Start | 0 | 0 | 0 |
| 240 | 20 | 0 | 10 |
| 300 | 60 | 40 | 50 |
| 360 | 100 | 90 | 100 |
| 480 | 100 | 100 | 100 |

**Table 12.**

| Percentage mortality (mean of 3 independent tests) | | | | |
|---|---|---|---|---|
| Time [min]/ Test material | 3-1 | 3-14 | 3-15 | 3-17 |
| Start | 0 | 0 | 0 | 0 |
| 270 | 0 | 10 | 50 | 60 |
| 330 | 30 | 20 | 100 | 100 |
| 390 | 60 | 50 | 100 | 100 |
| 480 | 100 | 80 | 100 | 100 |

The insect controlling activity of the compositions according to the invention are shown in Tables 7-12 above. It can also be seen from these tables that the use of carrier alone (compositions 3-5, 3-7) is less effective.

### Example 4

### Laboratory evaluation of insect controlling activity of various compositions on garden ants (Lasius niger).

### A. The following compositions were prepared by mixing the constituents listed in Table 13.

**Table 13**

| Composition | Silica | Carrier | Other |
|---|---|---|---|
| 4-1 | 32% by weight of Sipernat D17 | 62% by weight of Damolin GM2 | 3.0% by weight of onion concentrate and 3.0% by weight of menthol-eucalyptus concentrate |
| 4-3 | 32% by weight of Sipernat D17 | 62% by weight of Damolin GM2 | 6% by weight of sesame oil |

### B. Tests

Two grams of the powder compositions were used in this test at a temperature of 25°C and relative humidity of 80%. The same boxes as in Example 3 were used. 30 garden ants were used for each experiment. The results are presented in Table 14.

**Table 14.**

| Percentage mortality (mean of 3 independent tests) | |
|---|---|
| Time [min]/ Test material | 4-1 |
| Start | 0 |
| 85 | 8 |
| 165 | 16 |
| 240 | 54 |
| 315 | 97 |
| 405 | 100 |
| 1440 | 100 |

1 g and 0.5 g of powder of formulation 4-1 was used in this test at a temperature of 35°C and a relative humidity of 70%. The results are shown in Table 15.

**Table 15.**

| Percentage mortality (mean of 3 independent tests) | | |
|---|---|---|
| Time [min] Test material | 4-1 (1 g) | 4-1 (0.5 g) |
| Start | 0 | 0 |
| 120 | 13 | 0 |
| 180 | 60 | 34 |
| 300 | 100 | 100 |
| 1440 | 100 | 100 |

1 g of the powder formulations was used in this test at a temperature of 19°C and a relative humidity of 70%. The results are shown in Table 16.

**Table 16.**

| Percentage mortality (mean of 3 independent tests) | | |
|---|---|---|
| Time [min]/ Test material | 4-1 | 4-3 |
| Start | 0 | 0 |
| 80 | 4 | 0 |
| 190 | 29 | 38 |
| 270 | 79 | 88 |
| 1260 | 100 | 100 |
| 1440 | 100 | 100 |

### Example 5

Laboratory evaluation of insect controlling activity of a composition which contained 65% by weight of Damolin GM2 and 35% by weight of Sipernat® D17. The test was carried out in a specially designed cage of 3 m x 1 m x 1 m, in which the two long side walls and the ceiling were made from fine mesh. This cage was kept in a greenhouse with temperature and humidity control. Approximately 125 adult *Calliphora vomitoria* flies were released in the cage. The insects were acclimatized for 24 hours. Then, a cardboard dish (85 cm x 15 cm x 3.5 cm) filled with 20 g of the powder formulation, distributed through a strip of sugar, was placed in the centre of the cage. The mortality was checked every hour during a 6-hour test. The results are shown in Table 17. The mortality observed was compared with the natural mortality observed in a control test.

**Table 17**

| Time (min) | % mortality observed |
|---|---|
| Start | 0 |
| 60 | 0 |
| 120 | 0 |
| 180 | 9 |
| 240 | 25 |
| 300 | 38 |
| 360 | 43 |

The above examples clearly show the insect controlling activity of the compositions according to the invention.

## Claims

1. Composition having insect controlling activity, which comprises a carrier and, as active ingredient, at least hydrophobic amorphous silica, the composition containing 5-50% by weight, preferably 20-40% by weight, most preferably 25-35% by weight of hydrophobic amorphous silica, based on composition dry matter wherein the composition is in the form of a powder.

2. Composition according to claim 1, wherein the carrier is selected from the group consisting of diatomaceous earth, talc, clay, bentonite, montmorillonite, kaolin, activated carbon, attapulgite, amorphous alumina or a mixture thereof.

3. Composition according to claim 1 or 2, wherein the hydrophobic amorphous silica has a specific surface area of 80-250 m²/g, preferably 90-160 m²/g, most preferably 90-110 m²/g, determined in accordance with ISO 5794-1.

4. Composition according to one or more of the preceding claims, wherein the hydrophobic amorphous silica has a mean particle size of 2-10 micrometers, preferably 4-8 micrometers, most preferably 6.5 - 7.5 micrometers, determined in accordance with ASTM C 690-1992.

5. Composition according to one or more of the preceding claims, which also contains an additive selected from the group consisting of essential oils, garlic powder, ground black pepper, ground cayenne pepper, horseradish powder, paprika powder, hot paprika powder, menthol-eucalyptus concentrate or a mixture thereof.

6. Composition according to claim 5, wherein the additive forms 1-10% by weight, preferably 1-5% by weight, preferably approx. 2% by weight of the composition.

7. Composition according to claim 5, which contains 1-10% by weight, in particular 1-5% by weight, of hot paprika powder.

8. Composition according to claim 7, which has a moisture content of no more than 15%, preferably no more than 10%, more preferably no more than 5%.

9. Use of the composition according to one or more of the preceding claims as an insect control agent, in particular to control one of the insects selected from the group consisting of lice, cockroaches, flies, mites, fleas, storage pests and ants, more particularly *Dermanyssus gallinae, Blatella germanica, Calliphora vomitora* and *Lasius niger,* even more particularly *Dermanyssus gallinae*.

10. Use of the composition according to one or more of the preceding claims 1-8 as an active ingredient for the production of a pharmaceutical preparation having insect controlling activity

11. Use according to claim 10 for treating pets, livestock and birds, in particular chickens, pigeons and tropical birds, more particularly chickens.

12. Use according to claim 10 or 11 to control one of the insects selected from the group consisting of lice, cockroaches, flies, mites, fleas, storage pests and ants, in particular *Dermanyssus gallinae, Blatella germanica, Calliphora vomitora* and *Lasius niger*, more particularly *Dermanyssus gallinae*.

## Patentansprüche

1. Zusammensetzung mit Wirksamkeit zur Insektenbekämpfung, die einen Träger und als Wirkstoff mindestens hydrophobes amorphes Siliciumdioxid umfaßt, wobei die Zusammensetzung 5 bis 50 Gew.-%, vorzugsweise 20 bis 40 Gew.-%, am stärksten bevorzugt 25 bis 35 Gew.-% hydrophobes amorphes Siliciumdioxid, bezogen auf die Zusammensetzungstrockensubstanz, enthält, wobei die Zusammensetzung in Form eines Pulvers vorliegt.

2. Zusammensetzung nach Anspruch 1, wobei der Träger aus der Gruppe, bestehend aus Diatomeenerde, Talk, Ton, Bentonit, Montmorillonit, Kaolin, Aktivkohle, Attapulgit, amorphen Aluminiumoxid oder einem Gemisch davon, ausgewählt ist.

3. Zusammensetzung nach Anspruch 1 oder 2, wobei das hydrophobe amorphe Siliciumdioxid eine spezifische Oberfläche von 80 bis 250 m²/g, vorzugsweise 90 bis 160 m²/g, am stärksten bevorzugt 90 bis 110 m²/g aufweist, bestimmt gemäß ISO 5794-1.

4. Zusammensetzung nach einem oder mehreren der vorhergehenden Ansprüche, wobei das hydrophobe amorphe Siliciumdioxid eine mittlere Teilchengröße von 2 bis 10 µm, vorzugsweise 4 bis 8 µm, am stärksten bevorzugt 6,5 bis 7,5 µm aufweist, bestimmt gemäß ASTM C 690-1992.

5. Zusammensetzung nach einem oder mehreren der vorhergehenden Ansprüche, die ebenso ein Additiv enthält, ausgewählt aus der Gruppe, bestehend aus ätherischen Ölen, Knoblauchpulver, gemahlenem schwarzem Pfeffer, gemahlenem Cayennepfeffer, Meerrettichpulver, Paprikapulver, scharfem Paprikapulver, Menthol-Eukalyptus-Konzentrat oder ein Gemisch davon.

6. Zusammensetzung nach Anspruch 5, wobei das Additiv 1 bis 10 Gew.-%, vorzugsweise 1 bis 5 Gew.-%, vorzugsweise ungefähr 2 Gew.-% der Zusammensetzung bildet.

7. Zusammensetzung nach Anspruch 5, die 1 bis 10 Gew.-%, insbesondere 1 bis 5 Gew.-%, scharfes Paprikapulver enthält.

8. Zusammensetzung nach Anspruch 7, die einen Feuchtigkeitsgehalt von nicht mehr als 15 %, vorzugsweise nicht mehr als 10 %, stärker bevorzugt nicht mehr als 5 % aufweist.

9. Verwendung der Zusammensetzung nach einem oder mehreren der vorhergehenden Ansprüche als ein Insektenbekämpfungsmittel, insbesondere um eines der Insekten zu bekämpfen, ausgewählt aus der Gruppe, bestehend aus Läusen, Schaben, Fliegen, Milben, Flöhen, Lagerschädlingen und Ameisen, stärker bevorzugt *Dermanyssus gallinae, Blatella germanica, Calliphora vomitora* und *Lasius niger,* noch stärker bevorzugt *Dermanyssus gallinae*.

10. Verwendung der Zusammensetzung nach einem oder mehreren der vorhergehenden Ansprüche 1 bis 8 als ein Wirkstoff zur Herstellung eines pharmazeutischen Präparats mit Wirksamkeit zur Insektenbekämpfung.

11. Verwendung nach Anspruch 10 zur Behandlung von Haustieren, Vieh und Vögeln, insbesondere Hühnern, Tauben und tropischen Vögeln, stärker bevorzugt Hühnern.

12. Verwendung nach Anspruch 10 oder 11 zur Bekämpfung von einem der Insekten, ausgewählt aus der Gruppe, bestehend aus Läusen, Schaben, Fliegen, Milben, Flöhen, Lagerschädlingen und Ameisen, insbesondere *Dermanyssus gallinae, Blatella germanica, Calliphora vomitora* und *Lasius niger,* stärker bevorzugt *Dermanyssus gallinae*.

## Revendications

1. Composition ayant une activité de contrôle de la prolifération des insectes, qui comprend un support et, à titre d'ingrédient actif, au moins une silice amorphe hydrophobe, la composition contenant, 5 à 50 % en poids, de préférence 20 à 40 % en poids, le plus préférentiellement 25 à 35 % en poids de silice amorphe hydrophobe, teneurs exprimés sur la base de la matière sèche de la composition, ladite composition se présentant sous la forme d'une poudre.

2. Composition selon la revendication 1, où le support est choisi dans le groupe constitué par la terre de diatomée, le talc, l'argile, la bentonite, la montmorillonite, le kaolin, le charbon activé, l'attapulgite, l'alumine amorphe ou un mélange ceux-ci.

3. Composition selon la revendication 1 ou 2, où la silice amorphe hydrophobe possède une aire spécifique, déterminée selon la norme ISO 5794-1, de 80 à 250 m²/g, de préférence de 90 à 160 m²/g, de manière plus préférée de 90 à 110 m²/g.

4. Composition selon l'une ou plusieurs des revendications précédentes, où la silice amorphe hydrophobe présente une granulométrie moyenne, déterminée selon la norme ASTM C 690-1992, de 2 à 10 micromètres, de préférence de 4 à 8 micromètres, de manière plus préférée de 6,5 à 7,5 micromètres.

5. Composition selon l'une ou plusieurs des revendications précédentes, qui comprend aussi un additif choisi dans le groupe constitué par les huiles essentielles, la poudre d'ail, le poivre noir moulu, le piment de Cayenne moulu, la poudre de raifort, la poudre de paprika, la poudre de paprika fort, un concentré de menthol-eucalyptus ou un mélange de ceux-ci.

6. Composition selon la revendication 5, où l'additif constitue 1 à 10 % en poids, de préférence 1 à 5 % en poids, de manière plus préférée environ 2 % en poids de la composition.

7. Composition selon la revendication 5, qui contient 1 à 10 % en poids, en particulier 1 à 5 % en poids, de poudre de paprika fort.

8. Composition selon la revendication 7, qui présente une teneur en humidité pas supérieure à 15 %, de préférence pas supérieure à 10 %, plus préférentiellement pas supérieure à 5 %.

9. Utilisation de la composition selon l'une ou plusieurs des revendications précédentes en tant qu'agent de contrôle de la prolifération des insectes, en particulier pour contrôler la prolifération de l'un ou l'autre des insectes choisis dans le groupe comprenant les poux, les cafards, les mouches, les mites, les puces, les nuisibles s'attaquant aux stocks alimentaires et les fourmis, et plus particulièrement *Dermanyssus gallinae, Blatella germanica, Calliphora vomitora* et *Lasius niger,* et encore plus particulièrement *Dermanyssus gallinae*.

10. Utilisation de la composition selon l'une ou plusieurs des revendications 1 à 8 à titre d'ingrédient actif pour la production d'une préparation pharmaceutique ayant une activité de contrôle de la prolifération des insectes.

11. Utilisation selon la revendication 10 pour traiter les animaux de compagnie, les stocks de produits alimentaires et les oiseaux, en particulier les poulets, pigeons et oiseaux tropicaux, et plus particulièrement les poulets.

12. Utilisation selon la revendication 10 ou 11 pour contrôler la prolifération de l'un ou l'autre des insectes choisis dans le groupe comprenant les poux, des cafards, les mouches, les mites, les puces, les nuisibles s'attaquant aux stocks alimentaires et les fourmis, plus particulièrement *Dermanyssus gallinae, Blatella germanica, Calliphora vomitora* et *Lasius niger,* et encore plus particulièrement *Dermanyssus gallinae*.
